Europäisches Patentamt

European Patent Office

Office européen des brevets

(11) Publication number: **0 385 730**
**A1**

# EUROPEAN PATENT APPLICATION

(21) Application number: **90302087.3**

(22) Date of filing: **27.02.90**

(51) Int. Cl.5 **F16L 11/08**

(30) Priority: **01.03.89 JP 49526/89**

(43) Date of publication of application:
**05.09.90 Bulletin 90/36**

(84) Designated Contracting States:
**AT BE CH DE DK ES FR GB GR IT LI LU NL SE**

(71) Applicant: **JAPAN GORE-TEX, INC.**
**42-5, 1-chome Akazutsumi**
**Setagaya-ku Tokyo 156(JP)**

(72) Inventor: **Shimoda, Eiji**
**17-24, 3-Chome, Naka-Cho,**
**Musashino-Shi, Tokyo-To 180(JP)**
Inventor: **Motada, Akihiro**
**309-1, Nakai,**
**Okayama-Shi, Okayama-Ken 703(JP)**

(74) Representative: **McCallum, William Potter et al**
**Cruikshank & Fairweather 19 Royal**
**Exchange Square**
**Glasgow G1 3AE Scotland(GB)**

(54) **Composite plastics tube.**

(57) A composite plastics tube is made of a flexible plastics material (12) which contains longitudinally extending portions (10) of a more rigid, less flexible plastics material to impart greater rigidity to the tube.

## COMPOSITE PLASTICS TUBE

This invention relates to a composite plastics tube which is made of at least two different plastics materials.

Tubes have an internal passage through which substances can be transported, and may be made from a variety of different materials, such as metals, ceramics and synthetic resins, according to the intended function of the tube and the substances to be transported.

When a tube has bending flexibility, it has many advantages in that its path can be freely controlled, and it is convenient to handle and store as it can be wound into a coil, thus reducing its bulk.

However, in the case of tubes for medical uses, the outside layer that comes into contact with body tissues must be of a soft material so that it will not damage body tissues. Tubes composed solely of such materials are as a whole excessively soft, and as a result they are difficult to handle in that directional stability cannot be achieved during insertion.

When a tube is made from a synthetic resin, there are usually advantages in handling in that it exhibits bending flexibility and is easily bent in response to a slight external force. However, there are difficulties when the tube is required to maintain a fixed shape for a long period after deformation. Moreover, when the component material exhibits a degree of elasticity, it is difficult for the tube to maintain a fixed state of deformation.

With the aim of imparting a degree of rigidity to such tubes, according to the invention there is provided a composite plastics tube characterised in that the tube wall is composed of at least two different plastics materials, one of the materials being a flexible plastics material and forming the major portion of the tube wall, and another of the materials being a more rigid plastics material which is located within the flexible plastics material so as to impart rigidity to the tube.

Preferably the more rigid plastics material forms a plurality of strips embedded within the flexible plastics material of the tube wall and extending along the length of the tube.

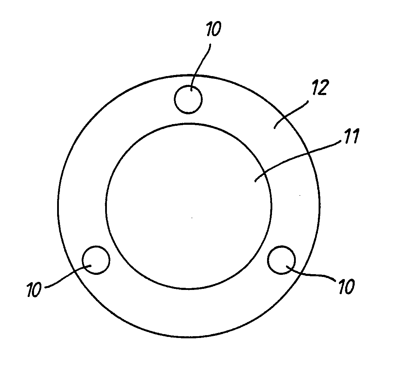

One embodiment of a composite plastics tube in accordance with the invention will now be described, by way of example, with reference to the accompanying drawings, in which the sole Figure shows a cross-sectional view of the tube.

Referring to the drawing, a composite tube is shown in which an internal passageway 11 is defined by an annular tube wall made of a relatively soft, flexible plastics material 12, such as nylon 610, and having longitudinally extending inserts 10 of a more rigid plastics material, such as polyethylene terephthalate, embedded therein. This provides a soft tube with a suitably soft texture, but which is easy to handle as a result of the rigidity increasing effect of the polyethylene terephthalate inserts 10.

Thus, when selection of a resin for a tube is limited because of the desired characteristics of the inside and outside surfaces of the tube, and the rigidity of the resin is too great or too low for the tube as whole, the rigidity can be adjusted without impairing the characteristics of the inside and outside surfaces of the tube by using a structure like that shown in the drawing.

This type of tube can be manufactured using two extrusion machines by which the resins forming the different materials of the tube are supplied and subjected to extrusion simultaneously through a suitably shaped die.

## Claims

1. A composite plastics tube characterised in that the tube wall is composed of at least two different plastics materials, one of the materials being a flexible plastics material (12) and forming the major portion of the tube wall, and another of the materials being a more rigid plastics material (10) which is located within the flexible plastics material so as to impart rigidity to the tube.

2. A composite plastics tube according to claim 1, in which the more rigid plastics material forms a plurality of strips (10) embedded within the flexible plastics material (12) of the tube wall and extending along the length of the tube.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 280 738 (HUTCHINSON-MAPA) * Page 2, line 35 - page 3, line 2; figures * | 1 | F 16 L 11/08 |
| A | | 2 | |
| Y | US-A-4 410 012 (REDDING et al.) * Abstract; figs. * | 1,2 | |
| Y | GB-A- 865 783 (A.E. ROHDE) * Claim 1; figs. * | 1,2 | |
| A | DE-A-3 322 378 (O.M. ZEIBIG) * Abstract; figs. * | 1,2 | |
| A | EP-A-0 029 185 (SIEMENS AG) * Abstract; figs. * | 1 | |

TECHNICAL FIELDS SEARCHED (Int. Cl.5)

F 16 L

The present search report has been drawn up for all claims

| Place of search | Date of completion of the search | Examiner |
|---|---|---|
| THE HAGUE | 11-06-1990 | BARTSCH A.W. |

EPO FORM 1503 03.82 (P0401)